# EUROPEAN PATENT APPLICATION

(11) **EP 4 475 029 A1**
(43) Date of publication of application: **11.12.2024**
(21) Application number: 22929972.2
(22) Date of filing: 23.12.2022
(51) Int. Cl.: G06F 30/20, B62D 65/00, G06F 30/15

(54) **METHOD, DEVICE, AND PROGRAM FOR PERFORMING ANALYZING OPTIMIZATION OF LOAD-TRANSMITTING STRUCTURE IN VEHICLE BODY SKELETON COMPONENT OF AUTOMOTIVE VEHICLE, AS WELL AS METHOD FOR MANUFACTURING LOAD-TRANSMITTING MEMBER IN VEHICLE BODY SKELETON COMPONENT OF AUTOMOTIVE VEHICLE**

(30) Priority: 03.03.2022 JP 2022032258
(71) Applicant: JFE Steel Corporation, Tokyo 100-0011 (JP)
(72) Inventor: AGEBA, Ryo, Tokyo 100-0011 (JP)
(74) Representative: Hoffmann Eitle
(86) International application number: PCT/JP2022/047586
(87) International publication number: WO 2023/166830

(57) **Abstract**

In setting an analysis condition of optimization analysis (21), an optimization analysis device for a load transfer structure in a body frame part of an automobile according to the present invention sets an impact load input portion 121 and a plurality of load transferred portions 123 in the body frame part of an optimization analysis model 120 (21a), divides a crashworthiness load into loads having loading capacities equal to or smaller than loading capacities of the plurality of load bearing members and determines transferred loads at the load transferred portions (21b), sets a loading condition defined to set the determined transferred loads as pieces of reaction force of the crashworthiness load for the load transferred portions 123 and a constraint condition defined to constrain displacement of the impact load input portion 121 (21c), and sets, as an optimization analysis condition, a predetermined objective and a constraint that displacements of the plurality of load transferred portions 123 are equal (21d).

## Description

### Field

The present invention relates to a method, a device, and a program for optimization analysis of a load transfer structure in a body frame part of an automobile for obtaining an optimum load transfer structure that divides a crashworthiness load input to the body frame part at the time of a crash of the automobile and transfers resulting loads to a plurality of load bearing members and a method of manufacturing the load transmission part in the body frame part of the automobile.

### Background

The proportion of battery powered vehicles in global automobile sales is expected to rapidly increase in the future. Features of body structures of the battery powered vehicles greatly different from traditional gasoline engine cars include mounting of a large-capacity battery and a protection structure therefor. Furthermore, a side impact test on an automobile includes an item of evaluating occupant injury in many car assessments. Then, in the side impact test of a battery powered vehicle, a crashworthiness load input from a pole to an automobile is a concentrated load. In addition, a distance from the position where the pole crashes to a battery is short. The side impact test can be said as a particularly severe impact test from the viewpoint of battery protection.

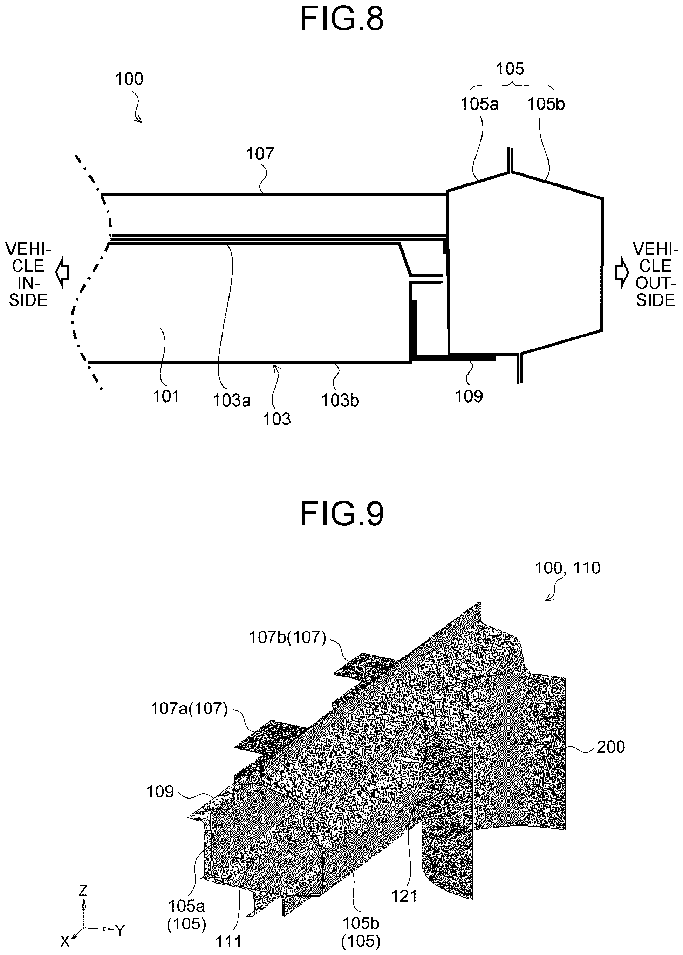

FIG. 8 illustrates a body 100 of a battery powered vehicle in which a battery 101 is installed in a battery case 103 including a battery case upper 103a and a battery case lower 103b. As illustrated in FIG. 9, the body 100 includes a side sill 105, floor cross members 107, and a battery case fixing part 109. The side sill 105 is a body frame part having a function as a crashworthiness energy absorption part (hereinafter, also referred to as EA part) that absorbs collision energy at the time when a pole 200 crashes from the outside in a body width direction and a crashworthiness load is input. The floor cross members 107 and the battery case fixing part 109 are a plurality of load bearing members that are not accepted to be deformed since the floor cross member 107 and the battery case fixing part 109 should prevent a large crashworthiness load input to the side sill 105 from being directly input to the battery case 103.

The plurality of load bearing members is disposed so as to abut on the side sill 105, and forms a load transfer path that distributes a crashworthiness load input to the side sill from an impact load input portion of the side sill to the load bearing members. Then, in order to prevent a large crashworthiness load from being input to the battery 101, one or a plurality of load transfer structures is required to be arranged in the load transfer path.

The load transfer structure needs to have a strength high enough to sufficiently absorb collision energy from the outside while needing to make loads to be transferred to load bearing members (hereinafter, referred to as "transferred loads") equal to or smaller than loading capacities of the load bearing members. Then, in order to satisfy the condition, it is important that the transferred loads are appropriately distributed to the load bearing members in the side sill 105 having a load transfer structure.

In contrast, a method of obtaining an optimum structure by performing structural optimization analysis using a computer and deleting an unnecessary portion above design space of a body may be used as a means of efficiently designing a body structure of an automobile having high performance (e.g., see Patent Literature 1). In the method, design space of a part and the like to be optimized, a loading condition regarding a crashworthiness load to be input to a body, a constraint condition of the body, and an optimization analysis condition obtained by combining an objective and a constraint regarding the optimization with each other are appropriately set. As a result, it is possible to obtain an optimum structure of a body frame part and the like that maximizes performance such as body rigidity and weight.

### Citation List

### Patent Literature

Patent Literature 1: Japanese Patent No. 5585672 Summary

### Technical Problem

According to the method disclosed in Patent Literature 1, a restraining position of an automotive body model and a plurality of input loads and input positions thereof are set as crashworthiness analysis conditions. An optimum shape of a body frame part or the like for satisfying an objective condition can be determined for the set plurality of input loads. Examples of the objective condition include strain energy minimum, generated stress minimum, and absorbed energy maximum. In contrast, in a combination of a constraint and an objective condition disclosed in Patent Literature 1, the magnitude and allocation of a load to be transferred from a body frame part to a plurality of load bearing members at the time when a crashworthiness load is input to a body including the body frame part and the load bearing members are not guaranteed. In particular, in the above-described body 100 of the battery powered vehicle in FIG. 8, in order to protect the battery 101, it is particularly important to consider distribution of transferred loads from the body frame part, which is an EA part, to the load bearing members, which are non-EA parts. In the method disclosed in Patent Literature 1, however, it is impossible to obtain an optimum load transfer structure in a body frame part in consideration of the distribution of the transferred loads from the body frame part to load bearing members.

The present invention has been made to solve the above-described problems, and an object thereof is to provide a method, a device and a program for optimization analysis of a load transfer structure in a body frame part of an automobile for an optimum load transfer structure that divides a crashworthiness load input to a body frame part at the time of a crash of an automobile and transfers resulting loads to a plurality of load bearing members and a method of manufacturing a load transmission part in the body frame part of the automobile.

### Solution to Problem

The inventors have studied how to obtain a load transfer structure that transfers a crashworthiness load input to a body frame part to a plurality of load bearing members while guaranteeing the magnitudes and allocation of loads to be transferred to the plurality of load bearing members. Then, the inventors have focused on points that, according to the law of action and reaction, the magnitudes of loads transferred from a body frame part to which a crashworthiness load has been input to load bearing members is the same as the magnitude of a load (hereinafter, referred to as reaction force) in a direction opposite to a direction of input of a crashworthiness load acting from the load bearing members to the body frame part even if the directions in which the loads act are opposite and that the sum of pieces of reaction force from the load bearing members is equal to the crashworthiness load input to the body frame part.

Moreover, the inventors have focused on a point that the load transfer structure, which divides a crashworthiness load input to a body frame part and transfers resulting loads to a plurality of load bearing members, transfers reaction force acting in a direction opposite to the direction of input of the crashworthiness load from the load bearing members to a body frame part to which the crashworthiness load has been input in an opposite direction.

Therefore, the inventors have reframed the magnitudes and allocation of loads to be transferred to load bearing members to be guaranteed as the magnitudes and allocation of pieces of reaction force of the load bearing members. The inventors have found that a load transfer structure capable of appropriately dividing a crashworthiness load input to a body frame part and transferring resulting loads to a plurality of load bearing members while guaranteeing the magnitudes and allocation of loads to be transferred to a plurality of load bearing members can be obtained by appropriately performing division such that the sum of pieces of reaction force of the load bearing members is equal to a crashworthiness load input to the body frame part and obtaining an optimum load transfer structure that transfers the pieces of reaction force obtained by the appropriate division toward the body frame part to which the crashworthiness load has been input from the load bearing members in a direction opposite to the crashworthiness load input direction.

The present invention is based on such findings, and specifically includes the following configurations.

An optimization analysis method according to the present invention for a load transfer structure in a body frame part of an automobile, in which an optimum load transfer structure is obtained by a computer performing following steps, the optimum load transfer structure being configured to divide a crashworthiness load input to the body frame part and transfer resulting loads to a plurality of load bearing members at a time of crash of the automobile including the body frame part and the plurality of load bearing members, includes: an automotive body model acquisition step of acquiring an automotive body model of all or a part of the automobile, the automotive body model being obtained by modeling the body frame part and the load bearing members with a two-dimensional element and/or a three-dimensional element; a design space setting step of setting a region where the load transfer structure in the automotive body model is allowed to be disposed as design space; an optimization block model generation step of generating an optimization block model obtained by performing modeling with a three-dimensional element in the design space that has been set and used for optimization analysis processing; a connection processing step of connecting the optimization block model that has been generated with the automotive body model and generating an optimization analysis model; an analysis condition setting step of setting an analysis condition for performing the optimization analysis processing; and an optimization analysis step of performing optimization analysis for obtaining an optimum structure of the optimization block model under the analysis condition that has been set, wherein the analysis condition setting step includes: an impact load input portion and load transferred portion setting step in which an impact load input portion is set at a portion of the body frame part of the optimization analysis model to which a crashworthiness load is to be input, and load transferred portions are set at portions of the body frame part that transfers loads to the plurality of load bearing members; a load bearing member transferred load determination step in which a crashworthiness load to be input to the optimization analysis model is divided into loads having loading capacities equal to or smaller than loading capacities of the plurality of load bearing members, and transferred loads to be transferred to the load bearing members at the load transferred portions are determined; a loading and constraint condition setting step in which a loading condition and a constraint condition are set, the loading condition being defined to set transferred loads, which have been determined, to be transferred to the load bearing members as pieces of reaction force of the crashworthiness load for the load transferred portions and set the transferred loads as input loads to be input to the optimization analysis model, the constraint condition being defined to constrain displacement of the impact load input portion; and an optimization analysis condition setting step in which a predetermined objective and a constraint that displacements of the plurality of load transferred portions are equal are set as an optimization analysis condition of the optimization analysis in the optimization analysis step.

In the optimization analysis condition setting step, a volume constraint ratio of the optimization block model may be further set, as the constraint, to a predetermined value or less within a range of 3% or more and 7% or less of a volume of the entire design space, and in the optimization analysis step, optimization analysis using densimetry of topology optimization may be performed.

The body frame part may be a side sill disposed at a side portion of the automobile and extending in a body front-rear direction, the load bearing members may be a battery case fixing part and a floor cross member, the battery case fixing part connecting a battery case disposed below the automobile with the side sill, prior to the analysis condition setting step, side collision analysis, in which a pole crashes against the side sill from an outside of the automotive body model in a body width direction, may be performed on the automotive body model, based on a result of the side collision analysis, in the impact load input portion and load transferred portion setting step, the impact load input portion and the load transferred portions in the body frame part of the automotive body model may be set, and in the load bearing member transferred load determination step, a crashworthiness load to be input to the body frame part and transferred loads to be transferred to the load bearing members may be determined.

A method of manufacturing a load transmission part in a body frame part of an automobile according to the present invention includes: obtaining a structure of a load transmission part of the body frame part by using the optimization analysis method for a load transfer structure in a body frame part of an automobile, according to the present invention; determining a shape of the load transmission part based on a structure of the load transmission part that has been obtained; and manufacturing the load transmission part in accordance with the shape that has been determined.

An optimization analysis device according to the present invention for a load transfer structure in a body frame part of an automobile, in which an optimum load transfer structure is obtained, the optimum load transfer structure being configured to divide a crashworthiness load input to the body frame part and transfer resulting loads to a plurality of load bearing members in an impact test of the automobile including the body frame part and the plurality of load bearing members includes: an automotive body model acquisition unit configured to acquire an automotive body model of all or a part of the automobile, the automotive body model being obtained by modeling the body frame part and the load bearing members with a two-dimensional element and/or a three-dimensional element; a design space setting unit configured to set design space in a region where the load transfer structure in the automotive body model is disposed; an optimization block model generation unit configured to generate an optimization block model obtained by performing modeling with a three-dimensional element in the design space that has been set and used for optimization analysis processing of the load transfer structure; a connection processing unit configured to connect the optimization block model that has been generated with the automotive body model and generates an optimization analysis model; an analysis condition setting unit configured to set an analysis condition for performing the optimization analysis processing; and an optimization analysis unit configured to perform optimization analysis for obtaining an optimum structure of the optimization block model under the analysis condition that has been set, wherein the analysis condition setting unit includes: an impact load input portion and load transferred portion setting unit configured to set, in the optimization analysis model, an impact load input portion at a portion of the optimization analysis model to which a crashworthiness load is to be input and load transferred portions at portions that transfer loads to the plurality of load bearing members; a load bearing member transferred load determination unit configured to divide a crashworthiness load to be input to the optimization analysis model into loads having loading capacities equal to or smaller than loading capacities of the plurality of load bearing members and determine transferred loads at the load transferred portions of the load bearing members; a loading and constraint condition setting unit configured to set a loading condition and a constraint condition, the loading condition being defined to set transferred loads to be transferred to the load bearing members as pieces of reaction force of the crashworthiness load for the plurality of load transferred portions and set the transferred loads as input loads to be input to the optimization analysis model, the constraint condition being defined to constrain displacement of the impact load input portion; and an optimization analysis condition setting unit configured to set a predetermined objective and a constraint that displacements of the plurality of load transferred portions are equal as an optimization analysis condition of the optimization analysis performed by the optimization analysis unit.

The optimization analysis condition setting unit may be further configured to set, as the constraint, a volume constraint ratio of the optimization block model within a range of 3% or more and 7% or less of the entire design space, and the optimization analysis unit may be configured to perform optimization analysis using densimetry of topology optimization.

An optimization analysis program according to the present invention for a load transfer structure in a body frame part of an automobile, in which an optimum load transfer structure is obtained, the optimum load transfer structure being configured to divide a crashworthiness load input to the body frame part and transfer resulting loads to a plurality of load bearing members in an impact test of the automobile including the body frame part and the plurality of load bearing members, causes a computer to function as: an automotive body model acquisition unit configured to acquire an automotive body model of all or a part of the automobile, the automotive body model being obtained by modeling the body frame part and the load bearing members with a two-dimensional element and/or a three-dimensional element; a design space setting unit configured to set design space in a region where the load transfer structure in the automotive body model is disposed; an optimization block model generation unit configured to generate an optimization block model obtained by performing modeling with a three-dimensional element in the design space that has been set and used for optimization analysis processing of the load transfer structure; a connection processing unit configured to connect the optimization block model that has been generated with the automotive body model and generates an optimization analysis model; an analysis condition setting unit configured to set an analysis condition for performing the optimization analysis processing; and an optimization analysis unit configured to perform optimization analysis for obtaining an optimum structure of the optimization block model under the analysis condition that has been set, the optimization analysis program causing the analysis condition setting unit to function as: an impact load input portion and load transferred portion setting unit configured to set, in the optimization analysis model, an impact load input portion at a portion of the optimization analysis model to which a crashworthiness load is to be input and load transferred portions at portions that transfer loads to the plurality of load bearing members; a load bearing member transferred load determination unit configured to divide a crashworthiness load to be input to the optimization analysis model into loads having loading capacities equal to or smaller than loading capacities of the plurality of load bearing members and determine transferred loads at the load transferred portions of the load bearing members; a loading and constraint condition setting unit configured to set a loading condition and a constraint condition, the loading condition being defined to set transferred loads to be transferred to the load bearing members as pieces of reaction force of the crashworthiness load for the plurality of load transferred portions and set the transferred loads as input loads to be input to the optimization analysis model, the constraint condition being defined to constrain displacement of the impact load input portion; and an optimization analysis condition setting unit configured to set a predetermined objective and a constraint that displacements of the plurality of load transferred portions are equal as an optimization analysis condition of the optimization analysis performed by the optimization analysis unit.

The optimization analysis condition setting unit may be further configured to set, as the constraint, a volume constraint ratio of the optimization block model within a range of 3% or more and 7% or less of the entire design space, and the optimization analysis unit may be configured to perform optimization analysis using densimetry of topology optimization.

### Advantageous Effects of Invention

In the present invention, a loading condition, a constraint condition, and a constraint are set as analysis conditions, and optimization analysis is performed for obtaining an optimum load transfer structure. The loading condition is defined to set transferred loads having loading capacities equal to or smaller than loading capacities of load bearing members at a plurality of load transferred portions in a body frame part as pieces of reaction force of a crashworthiness load and set the transferred loads as input loads. The constraint condition is defined to constrain displacement of an impact load input portion in the body frame part. The constraint is defined to make displacements of a plurality of load transferred portions equal. This enables a load transfer structure capable of appropriately distributing a transferred load from a body frame part to a plurality of load bearing members while guaranteeing the magnitudes and allocation of loads to be transferred to the load bearing members. Moreover, according to the present invention, an optimum load transfer structure is obtained by using the above-described optimization analysis. The shape of a load transmission part is determined based on the obtained optimum load transfer structure. The load transmission part is manufactured in according with the shape of the determined load transmission part. This enables manufacturing of a load transmission part capable of appropriately distributing a transferred load from a body frame part to a plurality of load bearing members.

### Brief Description of Drawings

FIG. 1 is a block diagram of an optimization analysis device for a load transfer structure in a body frame part of an automobile according to a first embodiment of the present invention.
FIG. 2 illustrates design space set in an automotive body model and an optimization block model generated in the design space in the first embodiment of the present invention.
FIG. 3 illustrates a loading condition and a constraint condition set in an optimization analysis model in the first embodiment and an inventive example in an example of the present invention ((a) perspective view (vehicle inside), (b) perspective view (vehicle outside)).
FIG. 4 illustrates an optimum structure of a load transfer structure in a side sill in the first embodiment and the inventive example in the example of the present invention ((a) perspective view, (b) cross-sectional view).
FIG. 5 is a flowchart illustrating a flow of processing of an optimization analysis method for a load transfer structure in a body frame part of an automobile according to the first embodiment of the present invention.
FIG. 6 illustrates a loading condition and a constraint condition set in an optimization analysis model in a comparative example in the example ((a) perspective view (vehicle inside), (b) perspective view (vehicle outside)).
FIG. 7 illustrates the comparative example of an optimum structure of a load transfer structure in a side sill in the example ((a) perspective view, (b) cross-sectional view).
FIG. 8 illustrates one example of a body of a battery powered vehicle.
FIG. 9 illustrates a side impact test in which a pole crashes against a body from the outside in a body width direction.

### Description of Embodiments

Prior to describing a first embodiment and a second embodiment of the present invention, a body of an automobile on which the present invention is focused will be described. In the drawings of the present application, an X direction, a Y direction, and a Z direction indicate a body front-rear direction, a body width direction, and a body vertical direction, respectively.

As illustrated in FIG. 9 in one example, the present invention is focused on a body 100 including a side sill 105, floor cross members 107, and a battery case fixing part 109. The side sill 105 is a body frame part. The floor cross members 107 and the battery case fixing part 109 are load bearing members.

The body frame part is a body part constituting a body frame. The side sill 105 is a body frame part disposed so as to extend in the body front-rear direction on both sides in the body width direction. As illustrated in FIG. 9, a side sill inner portion 105a and a side sill outer portion 105b are joined at both upper ends and lower ends. The side sill inner portion 105a and the side sill outer portion 105b have a hat-shaped cross sections. Openings of the side sill inner portion 105a and the side sill outer portion 105b face each other to form closed cross-sectional space.

The load bearing members are not accepted to be deformed since the load bearing members should prevent a crashworthiness load input to the body from being directly input to another body part. In order to prevent a crashworthiness load from being directly input to a battery case 103, which is a body part, from the viewpoint of protecting a battery 101 as illustrated in FIG. 8 above, the body 100 includes two floor cross members 107a and 107b and the battery case fixing part 109. The floor cross members 107a and 107b and the battery case fixing part 109 serve as load bearing members. The floor cross members 107a and 107b are disposed above the battery case 103 in the body front-rear direction, and abuts on the side sill inner portion 105a. The battery case fixing part 109 connects a lower portion of the battery case 103 (battery case lower 103b) with the side sill inner portion 105a to fix the battery case 103.

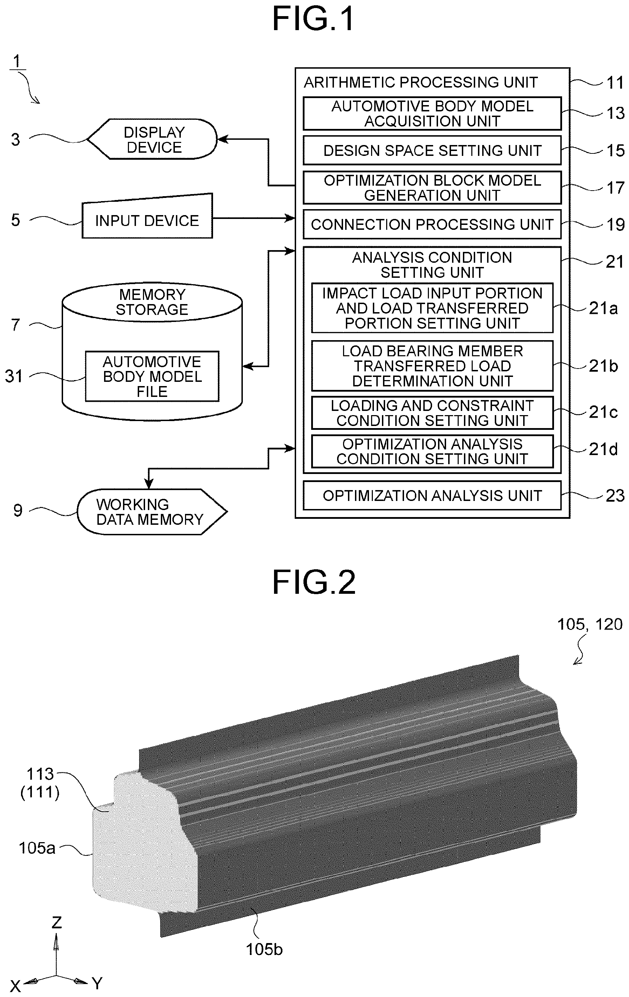

The side sill 105, the floor cross members 107, and the battery case fixing part 109 are modeled by using a two-dimensional element and/or a three-dimensional element. The modeled element information and the like may be stored in an automotive body model file 31 (see FIG. 1) to be described later.

A method, a device, and a program for optimization analysis of a load transfer structure (referred to as "load transfer structure optimization analysis method", "load transfer structure optimization analysis device", and "load transfer structure optimization analysis program", respectively) in a body frame part of an automobile according to the present invention in a case where the body 100 is to be analyzed will be described below.

### [First Embodiment]

### <Load Transfer Structure Optimization Analysis Device>

A load transfer structure optimization analysis device 1 according to the first embodiment of the present invention obtains a load transfer structure optimum for dividing a crashworthiness load input to a body frame part at the time of a crash of an automobile including the body frame part and a plurality of load bearing members and transferring resulting loads to the plurality of load bearing members. As illustrated in FIG. 1, the load transfer structure optimization analysis device 1 includes a personal computer (PC). The load transfer structure optimization analysis device 1 includes a display device 3, an input device 5, a memory storage 7, a working data memory 9, and an arithmetic processing unit 11. Then, the display device 3, the input device 5, the memory storage 7, and the working data memory 9 are connected to the arithmetic processing unit 11. The functions thereof are executed by commands from the arithmetic processing unit 11. The configurations of the load transfer structure optimization analysis device 1 according to the embodiment will be described below.

The display device 3 is used for displaying an analysis result, for example. The display device 3 includes an LCD monitor. The input device 5 is used for giving an instruction to display the automotive body model file 31 and inputting a condition of an operator, for example. The input device 5 includes a keyboard and a mouse. The memory storage 7 is used for storing various files such as the automotive body model file 31, and includes a hard disk. The working data memory 9 is used for temporarily storing data to be used by the arithmetic processing unit 11 and performing an arithmetic operation. The working data memory 9 includes a random access memory (RAM).

As illustrated in FIG. 1, the arithmetic processing unit 11 includes an automotive body model acquisition unit 13, a design space setting unit 15, an optimization block model generation unit 17, a connection processing unit 19, an analysis condition setting unit 21, and an optimization analysis unit 23. The arithmetic processing unit 11 includes a central processing unit (CPU) such as a PC. These units function when the CPU executes a predetermined program. The functions of the above-described units in the arithmetic processing unit 11 will be described below.

### <<Automotive Body Model Acquisition Unit>>

The automotive body model acquisition unit 13 acquires an automotive body model of all or a part of an automobile. The automotive body model is obtained by modeling a body frame part and load bearing members with a two-dimensional element and/or a three-dimensional element. In the embodiment, as illustrated in FIG. 9, the automotive body model acquisition unit 13 acquires an automotive body model 110 of a part of an automobile. The automotive body model 110 is obtained by modeling the side sill 105, the floor cross members 107, and the battery case fixing part 109 with a two-dimensional element. The side sill 105 is a body frame part. The floor cross members 107 and the battery case fixing part 109 are load bearing members.

### <<Design Space Setting Unit>>

The design space setting unit 15 sets a region where a load transfer structure can be disposed in an automotive body model as design space. In the embodiment, as illustrated in FIG. 9, the design space setting unit 15 sets design space 111 in closed cross-sectional space between the side sill inner portion 105a and the side sill outer portion 105b as a region where a load transfer structure can be disposed in the automotive body model 110.

### <<Optimization Block Model Generation Unit>>

The optimization block model generation unit 17 generates an optimization block model obtained by performing modeling with a three-dimensional element in design space set by the design space setting unit 15 and used for optimization analysis processing. In the embodiment, as illustrated in FIG. 2, the optimization block model generation unit 17 generates an optimization block model 113 in the design space 111 set by the design space setting unit 15.

### <<Connection Processing Unit>>

The connection processing unit 19 connects the optimization block model generated by the optimization block model generation unit 17 with the automotive body model to generate an optimization analysis model. In the embodiment, as illustrated in FIG. 2, the connection processing unit 19 connects the optimization block model 113 with the side sill 105 in the automotive body model 110 (see FIG. 9) to generate an optimization analysis model 120. In the optimization analysis model 120 in FIG. 2, display of the floor cross members 107 and the battery case fixing part 109, which are load bearing members, is omitted.

### <<Analysis Condition Setting Unit>>

The analysis condition setting unit 21 sets an analysis condition for the optimization analysis processing. As illustrated in FIG. 1, the analysis condition setting unit 21 includes an impact load input portion and load transferred portion setting unit 21a, a load bearing member transferred load determination unit 21b, a loading and constraint condition setting unit 21c, and an optimization analysis condition setting unit 21d.

### (Impact Load Input Portion And Load Transferred Portion Setting Unit)

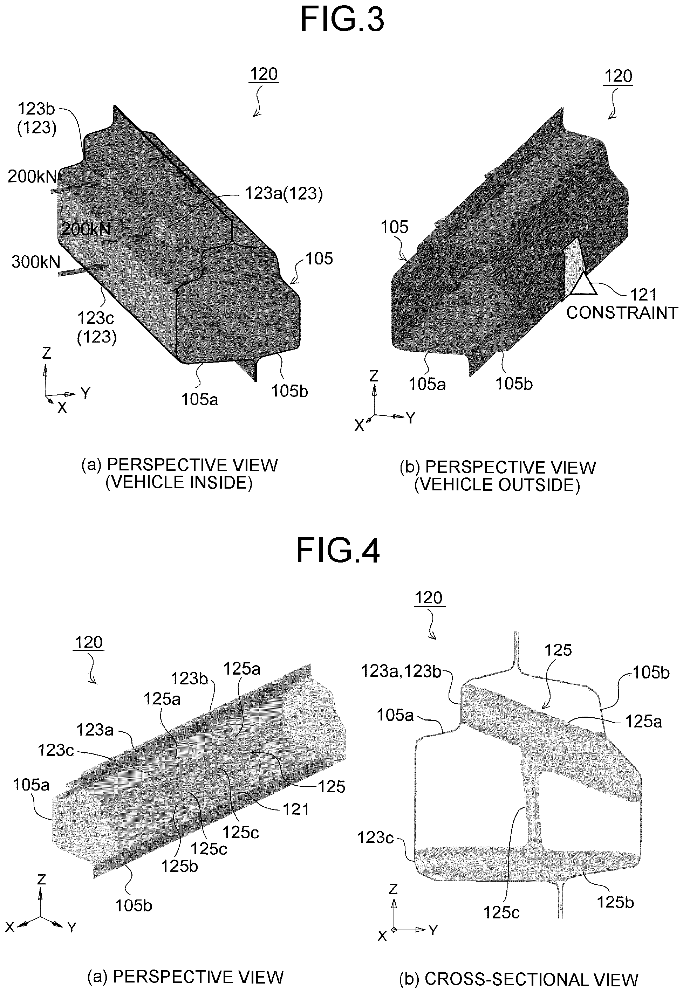

The impact load input portion and load transferred portion setting unit 21a sets an impact load input portion at a portion of a body frame part of the optimization analysis model to which a crashworthiness load is to be input, and sets a plurality of load transferred portions at portions of the body frame part that transfers loads to a plurality of load bearing members. One load input portion and a plurality of load transferred portions are set. The embodiment is focused on a side crash in which a pole 200 crashes against the outside of the side sill 105 in the body width direction as illustrated in FIG. 9. For this reason, as illustrated in FIG. 3, the impact load input portion and load transferred portion setting unit 21a sets an impact load input portion 121 at a portion of the side sill 105 of the optimization analysis model 120 to which a crashworthiness load is to be input, and sets a plurality of (three) load transferred portions 123 (123a, 123b, and 123c) at portions where a load is transferred from the side sill 105 to the floor cross members 107 and the battery case fixing part 109, which are load bearing members.

### (Load Bearing Member Transferred Load Determination Unit)

The load bearing member transferred load determination unit 21b divides a crashworthiness load to be input to the optimization analysis model into loads having loading capacities equal to or smaller than loading capacities of the plurality of load bearing members, and determines transferred loads to be transferred to the load bearing members at the load transferred portions.

The transferred loads may be determined depending on the arrangement and strengths of the load bearing members. What is important in the determination of the transferred loads is not absolute values but allocation thereof. Distribution is performed such that the sum of the transferred loads set at the plurality of load transferred portions is equal to the crashworthiness load input to the body frame part. Furthermore, the crashworthiness load to be input to the body frame part can be appropriately set. The crashworthiness load may be determined by performing impact analysis on the side impact test in FIG. 9.

In the embodiment, as illustrated in FIG. 3, the load bearing member transferred load determination unit 21b divides a crashworthiness load to be input to the optimization analysis model 120 into loads having loading capacities equal to or smaller than the loading capacities of the floor cross members 107 and the battery case fixing part 109. The load bearing member transferred load determination unit 21b determines any of transferred loads at the load transferred portions 123a and 123b, through which loads are transferred to the two floor cross members 107, as 200 kN, and determines a transferred load at the load transferred portion 123c of the battery case fixing part 109 as 300 kN.

### (Loading And Constraint Condition Setting Unit)

The loading and constraint condition setting unit 21c sets a loading condition and a constraint condition. The loading condition is defined to set transferred loads to be transferred to load bearing members determined by the load bearing member transferred load determination unit 21b as pieces of reaction force of a crashworthiness load for the load transferred portions and set the transferred loads as input loads input to the optimization analysis model. The constraint condition is defined to constrain displacement of the impact load input portion.

In the embodiment, the loading and constraint condition setting unit 21c sets a loading condition and a constraint condition. The loading condition is defined to set transferred loads (200 kN, 200 kN, and 300 kN) to be transferred to the floor cross members 107 and the battery case fixing part 109 as pieces of reaction force of a crashworthiness load (700 kN) for the load transferred portions 123a, 123b, and 123c and set the transferred loads as input loads input to the optimization analysis model 120. The constraint condition is defined to constrain displacement of the impact load input portion 121. Setting transferred loads as pieces of reaction force of a crashworthiness load for the load transferred portions means setting the transferred loads such that the transferred loads act on the load transferred portions in a direction opposite to a crashworthiness load input direction.

### (Optimization Analysis Condition Setting Unit)

The optimization analysis condition setting unit 21d sets, as an optimization analysis condition of optimization analysis, a predetermined objective and a constraint that displacements of a plurality of load transferred portions are equal.

The objective is set in accordance with an object of optimization. Examples of the objective include mass minimization, compliance minimization (stiffness maximization), and displacement minimization of load transferred portions. In the embodiment, displacement minimization of the load transferred portion 123 is set as an objective.

In contrast, the constraint imposes a constraint of some kind in optimization. In the present invention, as described above, displacements of the plurality of load transferred portions are equal under the constraint. A plurality of constraints can be set. Then, it is preferable to further set a constraint for setting a volume constraint ratio of an optimization block model (ratio of volume of optimization block model remaining by optimization processing to volume of design space) to a predetermined value or less within a range of 3% or more and 7% or less of the volume of the entire design space.

### <<Optimization Analysis Unit>>

The optimization analysis unit 23 is a step of performing optimization analysis for obtaining an optimum structure of the optimization block model under the analysis condition set by the analysis condition setting unit 21.

In the embodiment, the optimization analysis unit 23 performs optimization analysis by using the optimization block model 113 as an optimization analysis target under the loading condition, the constraint condition, and the optimization analysis condition (objective and constraint) set by the analysis condition setting unit 21 for the optimization analysis model 120 to obtain an optimum structure of the optimization block model 113. The connection processing unit 19 has performed processing of connecting the optimization block model 113 with the automotive body model 110 to generate the optimization analysis model 120. Then, the optimum structure of the optimization block model 113 is obtained as a load transfer structure optimum for transfer to a plurality of load bearing members.

For example, topology optimization can be applied to the optimization analysis performed by the optimization analysis unit 23. Then, in a case of a high intermediate density at the time when densimetry is used in the topology optimization, it is preferable to perform discretization by giving a penalty coefficient as an optimized parameter. Note that the value of the penalty coefficient can be appropriately set.

FIG. 4 illustrates a result obtained by applying topology optimization to the optimization analysis unit 23 and obtaining an optimum structure 125 of the optimization block model 113 in the embodiment. In FIG. 4, display of the floor cross members 107 and the battery case fixing part 109 are omitted.

As described above, the optimum structure 125 of the optimization block model 113 is obtained by leaving and erasing a three-dimensional element constituting the optimization block model 113 such that the analysis condition (loading condition, constraint condition, objective, and constraint) set by the analysis condition setting unit 21 is satisfied.

The optimization analysis unit 23 may perform the topology optimization as described above, or may perform optimization analysis by another calculation method. Furthermore, the optimization analysis unit 23 can use, for example, commercially available analysis software using a finite element method.

### <Load Transfer Structure Optimization Analysis Method>

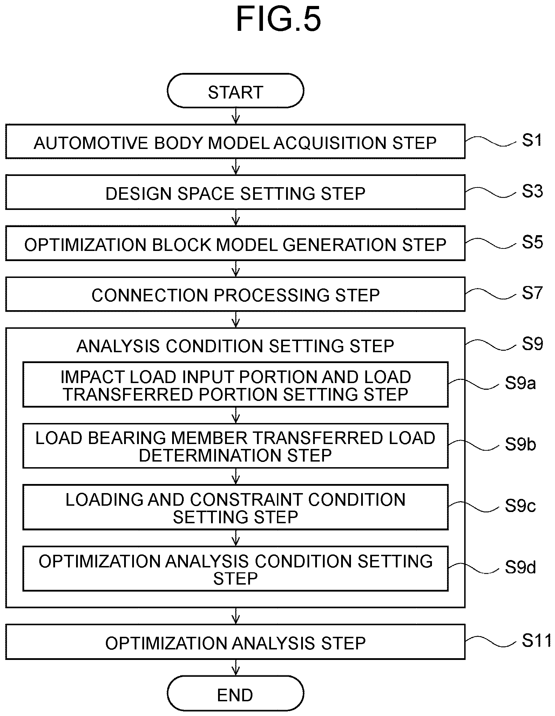

A structure optimization analysis method according to the embodiment of the present invention obtains a load transfer structure optimum for dividing a crashworthiness load input to a body frame part at the time of a crash of an automobile including the body frame part and a plurality of load bearing members and transferring resulting loads to the plurality of load bearing members by a computer performing the following steps. As illustrated in FIG. 5, the structure optimization analysis method includes an automotive body model acquisition step S1, a design space setting step S3, an optimization block model generation step S5, a connection processing step S7, an analysis condition setting step S9, and an optimization analysis step S11. The above-described steps will be described below focusing on the body 100 of a battery powered vehicle in FIG. 9.

### <<Automotive Body Model Acquisition Step>>

The automotive body model acquisition step S1 is a step of acquiring an automotive body model of all or a part of an automobile. The automotive body model is obtained by modeling a body frame part and load bearing members with a two-dimensional element and/or a three-dimensional element. In the embodiment, in the automotive body model acquisition step S1, the automotive body model acquisition unit 13 of the load transfer structure optimization analysis device 1 acquires the automotive body model 110 of a part of a battery powered vehicle. The automotive body model 110 is obtained by modeling the side sill 105, the floor cross members 107, and the battery case fixing part 109 with a two-dimensional element. The side sill 105 is a body frame part. The floor cross members 107 and the battery case fixing part 109 are load bearing members.

### <<Design Space Setting Step>>

The design space setting step S3 is a step of setting a region where a load transfer structure in an automotive body model can be disposed as design space. In the embodiment, in the design space setting step S3, as illustrated in FIGS. 2 and 9, the design space setting unit 15 of the load transfer structure optimization analysis device 1 sets, as the design space 111, closed cross-sectional space between the side sill inner portion 105a and the side sill outer portion 105b. The closed cross-sectional space is a region where a load transmission part can be disposed in the automotive body model 110.

### <<Optimization Block Model Generation Step>>

The optimization block model generation step S5 is a step of generating an optimization block model obtained by performing modeling with a three-dimensional element in design space set in the design space setting step S3 and used for optimization analysis processing. In the embodiment, in the optimization block model generation step S5, as illustrated in FIG. 2, the optimization block model generation unit 17 of the load transfer structure optimization analysis device 1 generates the optimization block model 113 in the design space 111 set between the side sill inner portion 105a and the side sill outer portion 105b.

### <<Connection Processing Step>>

The connection processing step S7 is a step of connecting the optimization block model generated in the optimization block model generation step S5 with the automotive body model and generating an optimization analysis model. In the embodiment, in the connection processing step S7, the connection processing unit 19 of the load transfer structure optimization analysis device 1 connects the optimization block model 113 with the automotive body model 110 to generate the optimization analysis model 120.

### <<Analysis Condition Setting Step>>

In the analysis condition setting step S9, an analysis condition for optimization analysis processing is set. As illustrated in FIG. 5, the analysis condition setting step S9 includes an impact load input portion and load transferred portion setting step S9a, a load bearing member transferred load determination step S9b, a loading and constraint condition setting step S9c, and an optimization analysis condition setting step S9d.

### (Impact Load Input Portion And Load Transferred Portion Setting Step)

In the impact load input portion and load transferred portion setting step S9a, an impact load input portion is set at a portion of a body frame part of the optimization analysis model to which a crashworthiness load is to be input, and load transferred portions are set at portions of the body frame part that transfers loads to a plurality of load bearing members. The embodiment is focused on a side crash in which the pole 200 crashes against the outside of the side sill 105 in the body width direction as illustrated in FIG. 9 above. For this reason, as illustrated in FIG. 3, the impact load input portion 121 is set at a portion of the side sill 105 of the optimization analysis model 120 to which a crashworthiness load is to be input, and the load transferred portions 123a, 123b, and 123c are set at portions where a load is transferred from the side sill 105 to the floor cross members 107 and the battery case fixing part 109, which are load bearing members.

Prior to the analysis condition setting step S9, as illustrated in FIG. 9 above, the impact load input portion 121 in the side sill 105 and the load transferred portions 123a, 123b, and 123c to the floor cross members 107 and the battery case fixing part 109 may be set by performing side collision analysis in which the pole 200 crashes against the side sill 105 from the outside of the automotive body model 110 in the body width direction and referring to the result of the side collision analysis.

### (Load Bearing Member Transferred Load Determination Step)

In the load bearing member transferred load determination step S9b, a crashworthiness load to be input to the optimization analysis model is divided into loads having loading capacities equal to or smaller than loading capacities of the plurality of load bearing members, and transferred loads to be transferred to the load bearing members at the load transferred portions are determined.

The transferred loads may be determined depending on the arrangement and strengths of the load bearing members. Moreover, distribution is performed such that the sum of the transferred loads set at the plurality of load transferred portions is equal to the crashworthiness load input to the body frame part.

In the embodiment, in the load bearing member transferred load determination step S9b, as illustrated in FIG. 3, the load bearing member transferred load determination unit 21b of the load transfer structure optimization analysis device 1 divides a crashworthiness load (700 kN) to be input to the side sill 105 in the optimization analysis model 120 into loads having loading capacities equal to or smaller than the loading capacities of the floor cross members 107 and the battery case fixing part 109. The load bearing member transferred load determination unit 21b determines transferred loads (200 kN each) at the load transferred portions 123a and 123b of the floor cross members 107 and a transferred load (300 kN) at the load transferred portion 123c of the battery case fixing part 109.

Prior to the analysis condition setting step S9, as illustrated in FIG. 9 above, the crashworthiness load to be input to the side sill 105 and the transferred loads to be transferred to the floor cross members 107 and the battery case fixing part 109 may be determined by performing side collision analysis on the automotive body model 110 and referring to the result of the side collision analysis.

### (Loading And Constraint Condition Setting Step)

In the loading and constraint condition setting step S9c, a loading condition and a constraint condition are set. The loading condition is defined to set transferred loads to be transferred to load bearing members determined in the load bearing member transferred load determination step S9b as pieces of reaction force of a crashworthiness load for the load transferred portions and set the transferred loads as input loads to be input to the optimization analysis model. The constraint condition is defined to constrain displacement of the impact load input portion.

In the embodiment, in the loading and constraint condition setting step S9c, as illustrated in FIG. 3, the loading and constraint condition setting unit 21c of the load transfer structure optimization analysis device 1 sets a loading condition and a constraint condition. The loading condition is defined to set transferred loads (200 kN, 200 kN, and 300 kN) to be transferred to the floor cross members 107 and the battery case fixing part 109 as pieces of reaction force of a crashworthiness load (700 kN) for the load transferred portions 123a, 123b, and 123c and set the transferred loads as input loads input to the optimization analysis model 120. The constraint condition is defined to constrain displacement of the impact load input portion 121.

### (Optimization Analysis Condition Setting Step)

In the optimization analysis condition setting step S9d, a predetermined objective and a constraint that displacements of a plurality of load transferred portions are equal are set as an optimization analysis condition of optimization analysis. In the embodiment, in the optimization analysis condition setting step S9d, the optimization analysis condition setting unit 21d of the load transfer structure optimization analysis device 1 sets, as an optimization analysis condition, an objective that minimizes displacements of load transferred portions and a constraint that displacements of the plurality of load transferred portions 123a, 123b, and 123c are equal.

In the optimization analysis condition setting step S9d, a plurality of constraints can be set. Moreover, it is preferable to set, as a constraint, a volume constraint ratio of an optimization block model (ratio of volume of optimization block model remaining by optimization processing to volume of design space) within a range of 3% or more and 7% or less of the volume of the entire design space. Therefore, in the embodiment, a constraint that the volume constraint ratio of the optimization block model 113 is 5% of the volume of the entire design space 111 is set in addition to the constraint that displacements of the load transferred portions 123a, 123b, and 123c are equal.

### <<Optimization Analysis Step>>

The optimization analysis step S11 is a step of performing optimization analysis for obtaining an optimum structure of the optimization block model under the analysis condition set in the analysis condition setting step S9.

In the embodiment, in the optimization analysis step S11, the optimization analysis unit 23 of the load transfer structure optimization analysis device 1 performs optimization analysis by using the optimization block model 113 as an optimization analysis target under the analysis condition (loading condition, constraint condition, and optimization analysis condition (objective and constraint)) set in the analysis condition setting step S9 for the optimization analysis model 120 to obtain the optimum structure 125 of the optimization block model 113 as illustrated in FIG. 4. Then, the optimum structure 125 of the optimization block model 113 is obtained as an optimum load transfer structure, in the side sill 105, which performs transfer to a plurality of load bearing members.

For example, topology optimization can be applied to the optimization analysis in the optimization analysis step S11. Then, in a case of a high intermediate density at the time when densimetry is used in the topology optimization, it is preferable to perform discretization by giving a penalty coefficient as an optimized parameter. The value of the penalty coefficient can be appropriately set.

The optimum structure 125 of the optimization block model 113 is obtained by leaving and erasing a three-dimensional element constituting the optimization block model such that the analysis condition (loading condition, constraint condition, objective, and constraint) set in the analysis condition setting step S9 is satisfied.

In the optimization analysis step S11, the topology optimization may be performed as described above, or optimization analysis may be performed by another calculation method. Furthermore, in the optimization analysis in the optimization analysis step, for example, commercially available analysis software using a finite element method can be used.

### <Load Transfer Structure Optimization Analysis Program>

Although a device and method for load transfer structure optimization analysis have been described in the first embodiment above, the first embodiment can be configured as a load transfer structure optimization analysis program causing each unit in the arithmetic processing unit 11 of the load transfer structure optimization analysis device 1 (FIG. 1) configured by a computer to function.

A load transfer structure optimization analysis program according to the first embodiment of the present invention is used to obtain a load transfer structure optimum for dividing a crashworthiness load input to a body frame part at the time of a crash of an automobile including the body frame part and a plurality of load bearing members and transferring resulting loads to the plurality of load bearing members. The load transfer structure optimization analysis program has a function of causing a computer to perform execution as the automotive body model acquisition unit 13, the design space setting unit 15, the optimization block model generation unit 17, the connection processing unit 19, the analysis condition setting unit 21, and the optimization analysis unit 23, as the arithmetic processing unit 11 in FIG. 1. Furthermore, the load transfer structure optimization analysis program causes the analysis condition setting unit 21 to function as the impact load input portion and load transferred portion setting unit 21a, the load bearing member transferred load determination unit 21b, the loading and constraint condition setting unit 21c, and the optimization analysis condition setting unit 21d.

As described above, according to a device, a method, and a program for load transfer structure optimization analysis according to the embodiment, a crashworthiness load input to a body frame part is divided into transferred loads having loading capacities equal to or smaller than loading capacities of a plurality of load bearing members. A loading condition and a constraint condition are set. The loading condition is defined to set the divided transferred loads as input loads, serving as pieces of reaction force of the input load, to be input to the body frame part. The constraint condition is defined to constrain displacements of portions where the crashworthiness load is input to the body frame part. Optimization processing of the load transfer structure is then performed. This enables an optimum load transfer structure capable of dividing a crashworthiness load input to the body frame part into loads having loading capacities equal to or smaller than loading capacities of load bearing members and transferring the loads while guaranteeing the magnitudes and allocation of loads to be transferred to a plurality of load bearing members. Furthermore, as illustrated in FIG. 8, this can prevent deformation of the battery case 103 at the time of a side crash of a battery powered vehicle including the body 100 in which the battery 101 is housed in the battery case 103, and can protect the battery 101.

In the above-described embodiment according to the present invention, an example of a case where an optimum structure of a load transfer structure is obtained has been described. The load transfer structure is provided inside a side sill to protect cabin space inside a vehicle and a battery case of a battery powered vehicle at the time of a side crash. The battery powered vehicle includes a battery electronic vehicle (BEV) and a plug-in hybrid vehicle (PHV) mounted with a battery.

The present invention is, however, not limited to the case where a battery case is protected at the time of a side crash of a battery powered vehicle. The present invention may be focused on another crash form, body frame part, and load bearing member.

Specific examples of the body frame part serving as a target of design of a body structure in consideration of distribution of transferred loads include a front side member at a front collision and a front pillar lower at a small overlap frontal collision.

In the front collision, a crashworthiness load is input to the front side member via a bumper reinforcement, and transferred to a crash box and the front side member. The load is then distributed from the front side member to a dash panel and a side sill. In this case, if being deformed, the dash panel or the side sill may enter cabin space to damage an occupant. Therefore, the dash panel and the side sill are load bearing members that are not accepted to be deformed since the dash panel and the side sill should protect the cabin space at the time of front collision.

Furthermore, in the small overlap frontal collision, a crashworthiness load input to the front pillar lower via the front side member or a tire is distributed and transferred from the front pillar lower to the side sill and a front pillar upper. In this case, as in the front collision, if being deformed, the side sill or the front pillar upper may enter cabin space to damage an occupant. Therefore, the side sill and the front pillar upper are load bearing members that are not accepted to be deformed since the side sill and the front pillar upper should protect the cabin space at the time of the small overlap frontal collision.

Then, in any crash form, each load bearing member at a destination of load transfer has a loading capacity that is not allowed to be exceeded, so that a load transfer structure capable of appropriately allocating a load to transfer destinations is necessary on a load transfer pathway in a body frame part. The present invention can also be applied to a stiffening member that stiffens a body frame part. A design guideline regarding a structure and a shape of the stiffening member of the body frame part can be determined in consideration of distribution of transferred loads to be transferred to load bearing members in a body.

Furthermore, in the above description, as illustrated in FIG. 9, an automotive body model of a part of an automobile including the side sill 105, the floor cross members 107, and the battery case fixing part 109 is to be analyzed. The side sill 105 is a body frame part. The floor cross members 107 and the battery case fixing part 109 are load bearing members. In contrast, in the present invention, all automotive body models of automobiles may be to be analyzed.

### [Second Embodiment]

Although, in the above-described first embodiment, an optimum load transfer structure in a body frame part of an automobile is obtained, the present invention can be configured as a method of manufacturing a load transmission part in the body frame part based on the obtained load transfer structure. That is, in a method of manufacturing a load transmission part in a body frame part of an automobile according to the second embodiment of the present invention, a structure of a load transmission part of the body frame part is obtained by using an optimization analysis method for a load transfer structure in a body frame part of an automobile according to the first embodiment, and a load transmission part is manufactured based on the obtained structure of the load transmission part.

For example, when the optimum structure 125 in FIG. 4 is obtained as an optimum load transfer structure by using the above-described optimization analysis method for a load transfer structure in a body frame part of an automobile according to the first embodiment, the shape of a load transmission part is determined based on the optimum structure 125. Then, the load transmission part is designed/manufactured in accordance with the determined shape of the load transmission part. In order to achieve a load transmission part with a sheet metal part which can be manufactured by performing metal sheet processing such as press forming and roll forming, a shape in which a ridge line section of the sheet metal part is along columnar portions (e.g., 125a, 125b, and 125c in FIG. 4 to be described later) in the obtained optimum structure 125 is required to be designed. Moreover, the strength of the ridge line section of the sheet metal part is desirably adjusted in accordance with the thickness of each columnar portion in the optimum structure 125. The strength of the ridge line section is adjusted by changing the thickness and the material strength of the sheet metal part. Furthermore, when a method of forming a metal having a higher degree of freedom in shape, such as a cast part and an aluminum extruded material, can be handled, the maximum effect can be obtained by manufacturing a load transmission part without changing the shape of the optimum structure 125.

This enables a crashworthiness load input to a body frame part at the time of a crash of an automobile to be divided into loads having loading capacities equal to or smaller than loading capacities of a plurality of load bearing members and transferred, so that a body part (e.g., battery) and cabin space can be protected at the time of the crash of an automobile.

### [Example]

An experiment for verifying effects of the method, the device, and the program for optimization analysis of a load transfer structure in a body frame part of an automobile according to the present invention was conducted. The experiment will be described below.

In an example, as in the above-described first embodiment, the automotive body model 110 including the side sill 105, the floor cross members 107, and the battery case fixing part 109 in FIG. 9 was set as an analysis target. The automotive body model 110 is used to protect the battery case 103 at the time when the pole 200 crashes against a side surface of the body 100 of a battery powered vehicle in which the battery 101 is housed in the battery case 103 as illustrated in FIG. 8. An optimum load transfer structure that divides a crashworthiness load input to the side sill 105 and transfers resulting loads to the floor cross members 107 and the battery case fixing part 109 was obtained (inventive example).

Then, prior to optimization analysis, in the example, first, the side collision analysis in FIG. 9 was performed, and an impact load input portion and a crashworthiness load in the side sill 105 were determined as illustrated in FIG. 3. In the side collision analysis, it was assumed that a pole having a diameter of 250 mm crashed against a portion on the side surface of the side sill 105 at an intermediate position between two floor cross members 107.

Subsequently, the automotive body model 110 to be analyzed in optimization analysis of a load transfer structure in a body frame part was acquired. As illustrated in FIG. 2, the automotive body model 110 is obtained by modeling the side sill 105, the floor cross members 107, and the battery case fixing part 109 with a two-dimensional element. The side sill 105 is a body frame part. The floor cross members 107 and the battery case fixing part 109 are load bearing members.

Next, the design space 111 was set in closed cross-sectional space between the side sill inner portion 105a and the side sill outer portion 105b as a region where a load transfer structure can be disposed in the automotive body model 110.

Next, the optimization block model 113 to be a target of optimization analysis processing was generated in the design space 111. The optimization block model 113 was connected with the automotive body model 110 to generate the optimization analysis model 120.

Next, an analysis condition for performing the optimization analysis processing was set for the generated optimization analysis model 120. In the setting of the analysis condition of the optimization analysis processing, first, as illustrated in FIG. 3, the impact load input portion 121 in the side sill 105 and a plurality of load transferred portions 123 were set based on a result of the side collision analysis. The impact load input portion 121 is a portion where the pole 200 comes into contact with the side sill 105 in the side collision analysis. Moreover, the load transferred portions 123 includes portions (123a and 123b) where the side sill 105 is connected with the floor cross members 107 as illustrated in FIG. 3 and a portion (123c) where the side sill 105 is connected with the battery case fixing part 109.

Next, transferred loads to be transferred from the side sill 105 to the floor cross members 107 and the battery case fixing part 109 were determined. In the example, transferred loads in the load transferred portions 123a and 123b where loads are transferred to the floor cross member 107 were determined as 200 kN, and a transferred load in the load transferred portion 123c where a load is transferred to the battery case fixing part 109 was determined as 300 kN based on the result of the side collision analysis of the automotive body model 110 in FIG. 9.

Next, as illustrated in FIG. 3, a loading condition and a constraint condition were set. The loading condition was defined to set transferred loads (200 kN, 200 kN, and 300 kN) to be transferred to the floor cross members 107 and the battery case fixing part 109 as pieces of reaction force of a crashworthiness load (700 kN) for the load transferred portions 123a, 123b, and 123c and set the transferred loads as input loads input to the optimization analysis model 120. The constraint condition was defined to constrain displacement of the impact load input portion 121.

Next, an objective that minimizes displacements of load transferred portions 123 (123a, 123b, and 123c) and a constraint that displacements of three load transferred portions 123a, 123b, and 123c are equal were set as optimization analysis conditions. Moreover, the volume constraint ratio of the optimization block model was set to 5% or less of the volume of the entire design space as a constraint.

Then, the optimization processing of the optimization block model was performed under the loading condition, the constraint condition, and the optimization analysis condition set as analysis conditions, and an optimum structure of the optimization block model was obtained as an optimum load transfer structure.

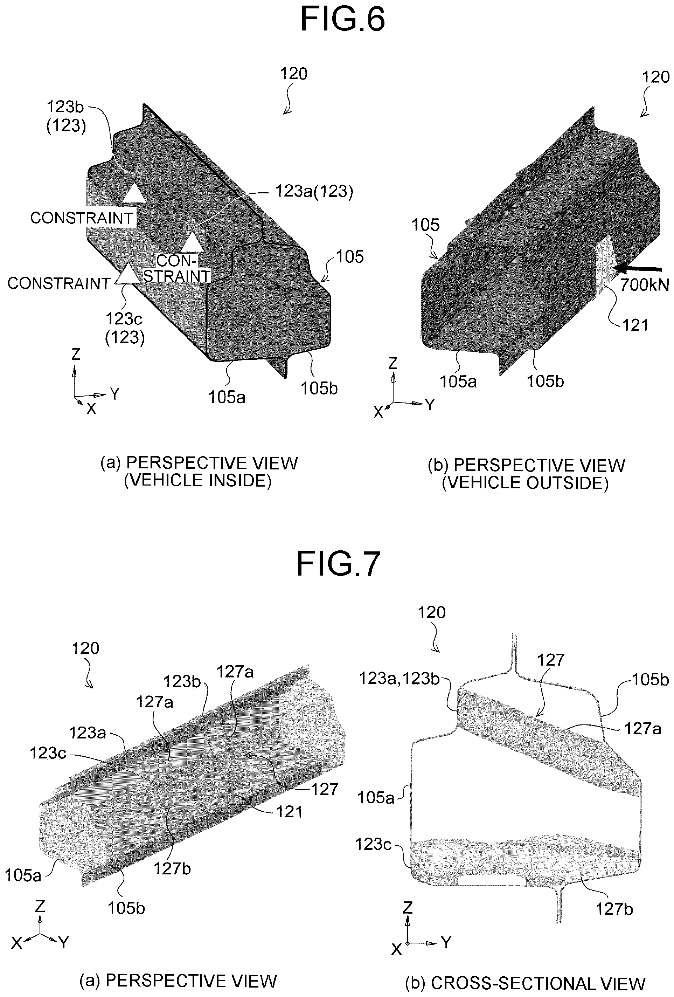

In the example, as a comparison target, as illustrated in FIG. 6, a loading condition defined to input the crashworthiness load (= 700 kN) to the impact load input portion 121 and a constraint condition defined to constrain displacements of the load transferred portions 123 (123a, 123b, and 123c) were set. Optimization processing was performed as in the inventive example to obtain an optimum structure of the optimization block model 113 (comparative example). An objective that minimizes displacement of the impact load input portion 121 and a constraint that the volume constraint ratio of the optimization block model is set to 5% or less of the volume of the entire design space were set as optimization analysis conditions in the comparative example.

FIG. 4 illustrates the optimum structure 125 of the optimization block model obtained in the inventive example. Moreover, FIG. 7 illustrates an optimum structure 127 of the optimization block model obtained in the comparative example.

The optimum structure 125 of the optimization block model in the inventive example includes a portion 125c in addition to a portion 125a and a portion 125b. The portion 125a extends toward the load transferred portions 123a and 123b from an upper portion of the side sill outer portion 105b to the floor cross members 107. The portion 125b extends toward the load transferred portion 123c from a lower portion of the side sill outer portion 105b to the battery case fixing part 109. The portion 125c connects the portion 125a with the portion 125b.

In contrast, although the optimum structure 127 of the optimization block model in the comparative example includes a portion 127a and a portion 127b, the optimum structure 127 does not include a portion that connects the portion 127a with the portion 127b as seen in the optimum structure 125 of the inventive example. The portion 127a extends toward the load transferred portions 123a and 123b from the upper portion of the side sill outer portion 105b to the floor cross members 107. The portion 127b extends toward the load transferred portion 123c from the lower portion of the side sill outer portion 105b to the battery case fixing part 109. From this, the portion 125c in the optimum structure 125 of the inventive example is considered to function to equally minimize displacements of the three load transferred portions 123a, 123b, and 123c.

Next, in order to verify effects of the optimum structure obtained by the optimization analysis, a load transfer test was conducted by using the side sill 105 in FIG. 6. In the load transfer test, the optimum structure 125 (inventive example) or the optimum structure 127 (comparative example) of the optimization block model was disposed inside the side sill 105. A load of 700 kN was given to the impact load input portion 121. Transferred loads at the load transferred portions 123a and 123b for the two floor cross members 107 and the load transferred portion 123c for the battery case fixing part 109 were determined. Table 1 illustrates analysis results of transferred loads at the load transferred portions 123a, 123b, and 123 of the side sill 105 in which the optimum structure 125 of the optimization block model according to the inventive example or the optimum structure 127 of the optimization block model according to the comparative example is disposed.

**Table 1**

| | | | | Transferred loads to load bearing members |
|---|---|---|---|---|
| | Crashworthiness load input from pole to side sill | Floor cross member No. 1 | Floor cross member No. 2 | Battery case fixing part |
| Target | 700 kN | 200 kN | 200 kN | 300 kN |
| Inventive example | 700 kN | 210 kN | 210 kN | 280 kN |
| Comparative example | 700 kN | 150 kN | 150 kN | 400 kN |

In Table 1, floor cross member No. 1 and floor cross member No. 2 are transfer loads at the load transferred portion 123a and the load transferred portion 123b, respectively. A transferred load to the battery case fixing part is a transferred load at the load transferred portion 123c.

As illustrated in Table 1, in a case of the optimum structure 125 of the optimization block model according to the inventive example, distribution of transferred loads at the load transferred portions 123 was achieved on target. In contrast, in a case of the optimum structure 127 of the optimization block model according to the comparative example, transferred loads at the load transferred portions 123 cannot be adjusted. Transferred loads to the cross members are smaller than the target by 50 kN. A transferred load to the battery case fixing part is larger than the target by 100 kN. The results are greatly different from the target.

As described above, according to the method, the device, and the program for optimization analysis of a load transfer structure in a body frame part of an automobile according to the present invention, it is exhibited that an optimum load transfer structure capable of appropriately dividing a crashworthiness load input to a body frame part and transferring loads having loading capacities equal to or smaller than loading capacities of load bearing members can be obtained.

### Industrial Applicability

According to the present invention, a method, a device and a program for optimization analysis of a load transfer structure in a body frame part of an automobile for an optimum load transfer structure that divides a crashworthiness load input to a body frame part at the time of a crash of an automobile and transfers resulting loads to a plurality of load bearing members and a method of manufacturing a load transmission part in the body frame part of the automobile can be provided.

### Reference Signs List

1 LOAD TRANSFER STRUCTURE OPTIMIZATION ANALYSIS DEVICE
3 DISPLAY DEVICE
5 INPUT DEVICE
7 MEMORY STORAGE
9 WORKING DATA MEMORY
11 ARITHMETIC PROCESSING UNIT
13 AUTOMOTIVE BODY MODEL ACQUISITION UNIT
15 DESIGN SPACE SETTING UNIT
17 OPTIMIZATION BLOCK MODEL GENERATION UNIT
19 CONNECTION PROCESSING UNIT
21 ANALYSIS CONDITION SETTING UNIT
21a IMPACT LOAD INPUT PORTION AND LOAD TRANSFERRED PORTION SETTING UNIT
21b LOAD BEARING MEMBER TRANSFERRED LOAD DETERMINATION UNIT
21c LOADING AND CONSTRAINT CONDITION SETTING UNIT 21d OPTIMIZATION ANALYSIS CONDITION SETTING UNIT
23 OPTIMIZATION ANALYSIS UNIT
31 AUTOMOTIVE BODY MODEL FILE
100 BODY
101 BATTERY
103 BATTERY CASE
103a BATTERY CASE UPPER
103b BATTERY CASE LOWER
105 SIDE SILL
105a SIDE SILL INNER PORTION
105b SIDE SILL OUTER PORTION
107 FLOOR CROSS MEMBER
107a FLOOR CROSS MEMBER
107b FLOOR CROSS MEMBER
109 BATTERY CASE FIXING PART
110 AUTOMOTIVE BODY MODEL
111 DESIGN SPACE
113 OPTIMIZATION BLOCK MODEL
120 OPTIMIZATION ANALYSIS MODEL
121 IMPACT LOAD INPUT PORTION
123 LOAD TRANSFERRED PORTION
123a LOAD TRANSFERRED PORTION
123b LOAD TRANSFERRED PORTION
123c LOAD TRANSFERRED PORTION
125 OPTIMUM STRUCTURE
125a PORTION
125b PORTION
125c PORTION
127 OPTIMUM STRUCTURE
127a PORTION
127b PORTION
200 POLE

## Claims

1. An optimization analysis method for a load transfer structure in a body frame part of an automobile, in which an optimum load transfer structure is obtained by a computer performing following steps, the optimum load transfer structure being configured to divide a crashworthiness load input to the body frame part and transfer resulting loads to a plurality of load bearing members at a time of crash of the automobile including the body frame part and the plurality of load bearing members, the optimization analysis method comprising:
an automotive body model acquisition step of acquiring an automotive body model of all or a part of the automobile, the automotive body model being obtained by modeling the body frame part and the load bearing members with a two-dimensional element and/or a three-dimensional element;
a design space setting step of setting a region where the load transfer structure in the automotive body model is allowed to be disposed as design space;
an optimization block model generation step of generating an optimization block model obtained by performing modeling with a three-dimensional element in the design space that has been set and used for optimization analysis processing;
a connection processing step of connecting the optimization block model that has been generated with the automotive body model and generating an optimization analysis model;
an analysis condition setting step of setting an analysis condition for performing the optimization analysis processing; and
an optimization analysis step of performing optimization analysis for obtaining an optimum structure of the optimization block model under the analysis condition that has been set,
wherein the analysis condition setting step includes:
an impact load input portion and load transferred portion setting step in which an impact load input portion is set at a portion of the body frame part of the optimization analysis model to which a crashworthiness load is to be input, and load transferred portions are set at portions of the body frame part that transfers loads to the plurality of load bearing members;
a load bearing member transferred load determination step in which a crashworthiness load to be input to the optimization analysis model is divided into loads having loading capacities equal to or smaller than loading capacities of the plurality of load bearing members, and transferred loads to be transferred to the load bearing members at the load transferred portions are determined;
a loading and constraint condition setting step in which a loading condition and a constraint condition are set, the loading condition being defined to set transferred loads, which have been determined, to be transferred to the load bearing members as pieces of reaction force of the crashworthiness load for the load transferred portions and set the transferred loads as input loads to be input to the optimization analysis model, the constraint condition being defined to constrain displacement of the impact load input portion; and
an optimization analysis condition setting step in which a predetermined objective and a constraint that displacements of the plurality of load transferred portions are equal are set as an optimization analysis condition of the optimization analysis in the optimization analysis step.

2. The optimization analysis method for a load transfer structure in a body frame part of an automobile according to claim 1, wherein
in the optimization analysis condition setting step, a volume constraint ratio of the optimization block model is further set, as the constraint, to a predetermined value or less within a range of 3% or more and 7% or less of a volume of the entire design space, and
in the optimization analysis step, optimization analysis using densimetry of topology optimization is performed.

3. The optimization analysis method for a load transfer structure in a body frame part of an automobile according to claim 1 or 2,
wherein the body frame part is a side sill disposed at a side portion of the automobile and extending in a body front-rear direction,
the load bearing members are a battery case fixing part and a floor cross member, the battery case fixing part connecting a battery case disposed below the automobile with the side sill,
prior to the analysis condition setting step, side collision analysis, in which a pole crashes against the side sill from an outside of the automotive body model in a body width direction, is performed on the automotive body model,
based on a result of the side collision analysis,
in the impact load input portion and load transferred portion setting step, the impact load input portion and the load transferred portions in the body frame part of the automotive body model are set, and
in the load bearing member transferred load determination step, a crashworthiness load to be input to the body frame part and transferred loads to be transferred to the load bearing members are determined.

4. A method of manufacturing a load transmission part in a body frame part of an automobile, comprising:
obtaining a structure of a load transmission part of the body frame part by using the optimization analysis method for a load transfer structure in a body frame part of an automobile, according to any one of claims 1 to 3;
determining a shape of the load transmission part based on a structure of the load transmission part that has been obtained; and
manufacturing the load transmission part in accordance with the shape that has been determined.

5. An optimization analysis device for a load transfer structure in a body frame part of an automobile, in which an optimum load transfer structure is obtained, the optimum load transfer structure being configured to divide a crashworthiness load input to the body frame part and transfer resulting loads to a plurality of load bearing members in an impact test of the automobile including the body frame part and the plurality of load bearing members, the optimization analysis device comprising:
an automotive body model acquisition unit configured to acquire an automotive body model of all or a part of the automobile, the automotive body model being obtained by modeling the body frame part and the load bearing members with a two-dimensional element and/or a three-dimensional element;
a design space setting unit configured to set design space in a region where the load transfer structure in the automotive body model is disposed;
an optimization block model generation unit configured to generate an optimization block model obtained by performing modeling with a three-dimensional element in the design space that has been set and used for optimization analysis processing of the load transfer structure;
a connection processing unit configured to connect the optimization block model that has been generated with the automotive body model and generates an optimization analysis model;
an analysis condition setting unit configured to set an analysis condition for performing the optimization analysis processing; and
an optimization analysis unit configured to perform optimization analysis for obtaining an optimum structure of the optimization block model under the analysis condition that has been set,
wherein the analysis condition setting unit includes:
an impact load input portion and load transferred portion setting unit configured to set, in the optimization analysis model, an impact load input portion at a portion of the optimization analysis model to which a crashworthiness load is to be input and load transferred portions at portions that transfer loads to the plurality of load bearing members;
a load bearing member transferred load determination unit configured to divide a crashworthiness load to be input to the optimization analysis model into loads having loading capacities equal to or smaller than loading capacities of the plurality of load bearing members and determine transferred loads at the load transferred portions of the load bearing members;
a loading and constraint condition setting unit configured to set a loading condition and a constraint condition, the loading condition being defined to set transferred loads to be transferred to the load bearing members as pieces of reaction force of the crashworthiness load for the plurality of load transferred portions and set the transferred loads as input loads to be input to the optimization analysis model, the constraint condition being defined to constrain displacement of the impact load input portion; and
an optimization analysis condition setting unit configured to set a predetermined objective and a constraint that displacements of the plurality of load transferred portions are equal as an optimization analysis condition of the optimization analysis performed by the optimization analysis unit.

6. The optimization analysis device for a load transfer structure in a body frame part of an automobile according to claim 5,
wherein the optimization analysis condition setting unit is further configured to set, as the constraint, a volume constraint ratio of the optimization block model within a range of 3% or more and 7% or less of the entire design space, and
the optimization analysis unit is configured to perform optimization analysis using densimetry of topology optimization.

7. An optimization analysis program for a load transfer structure in a body frame part of an automobile, in which an optimum load transfer structure is obtained, the optimum load transfer structure being configured to divide a crashworthiness load input to the body frame part and transfer resulting loads to a plurality of load bearing members in an impact test of the automobile including the body frame part and the plurality of load bearing members, the optimization analysis program causing a computer to function as:
an automotive body model acquisition unit configured to acquire an automotive body model of all or a part of the automobile, the automotive body model being obtained by modeling the body frame part and the load bearing members with a two-dimensional element and/or a three-dimensional element;
a design space setting unit configured to set design space in a region where the load transfer structure in the automotive body model is disposed;
an optimization block model generation unit configured to generate an optimization block model obtained by performing modeling with a three-dimensional element in the design space that has been set and used for optimization analysis processing of the load transfer structure;
a connection processing unit configured to connect the optimization block model that has been generated with the automotive body model and generates an optimization analysis model;
an analysis condition setting unit configured to set an analysis condition for performing the optimization analysis processing; and
an optimization analysis unit configured to perform optimization analysis for obtaining an optimum structure of the optimization block model under the analysis condition that has been set,
the optimization analysis program causing the analysis condition setting unit to function as:
an impact load input portion and load transferred portion setting unit configured to set, in the optimization analysis model, an impact load input portion at a portion of the optimization analysis model to which a crashworthiness load is to be input and load transferred portions at portions that transfer loads to the plurality of load bearing members;
a load bearing member transferred load determination unit configured to divide a crashworthiness load to be input to the optimization analysis model into loads having loading capacities equal to or smaller than loading capacities of the plurality of load bearing members and determine transferred loads at the load transferred portions of the load bearing members;
a loading and constraint condition setting unit configured to set a loading condition and a constraint condition, the loading condition being defined to set transferred loads to be transferred to the load bearing members as pieces of reaction force of the crashworthiness load for the plurality of load transferred portions and set the transferred loads as input loads to be input to the optimization analysis model, the constraint condition being defined to constrain displacement of the impact load input portion; and
an optimization analysis condition setting unit configured to set a predetermined objective and a constraint that displacements of the plurality of load transferred portions are equal as an optimization analysis condition of the optimization analysis performed by the optimization analysis unit.

8. The optimization analysis program for a load transfer structure in a body frame part of an automobile according to claim 7, wherein
the optimization analysis condition setting unit is further configured to set, as the constraint, a volume constraint ratio of the optimization block model within a range of 3% or more and 7% or less of the entire design space, and
the optimization analysis unit is configured to perform optimization analysis using densimetry of topology optimization.
